# EUROPEAN PATENT APPLICATION

(11) **EP 2 023 066 A1**
(43) Date of publication of application: **11.02.2009**
(21) Application number: 07252940.7
(22) Date of filing: 25.07.2007
(51) Int. Cl.: F25J 3/06, B01D 53/00, C01B 3/50, C01B 31/22, F25J 3/04

(54) **Separation of carbon dioxide and hydrogen**

(71) Applicant: BP Alternative Energy Holdings Limited, Middlesex TW16 7BP (GB)
(72) Inventor: Harper, Roger Neil, Leatherhead, Surrey, KT 22 7NL (GB); Huda, Badrul, Sunbury-on-Thames, Middlesex, TW16 7LN (GB); Hinderink, Antonie Pieter, 4800 GB Breda (NL); Van der Pol, Evert, 4800 GB Breda (NL)
(74) Representative: Collins, Frances Mary

(57) **Abstract**

This invention relates to recovering carbon dioxide (77) and hydrogen (31) in concentrated form from a shifted synthesis gas stream (1) comprising hydrogen and carbon dioxide thereby generating a carbon dioxide stream that is sequestered or used for enhanced oil recovery and a hydrogen stream that is used as fuel for a power plant thereby generating electricity.
In the process of this invention a shifted synthesis gas stream is fed to a membrane separation unit (M-1) at a pressure of at least 50 bar gauge and the hydrogen rich permeate stream (3) is fed directly to the combustor of a gas turbine without any requirement to recompress the hydrogen. The residual gas stream (carbon dioxide enriched stream 2) from the membrane separation unit is cooled using at least one, preferably, at least two internal refrigeration stages (Ex-2,Ex-3,Ex-4,Ex-5,Ex-6,Ex-7,Ex-8) such that the hydrogen containing offgas (29) is also obtained at above the operating pressure of the combustor of the gas turbine.

## Description

This invention relates to recovering carbon dioxide and hydrogen in concentrated form from a synthesis gas stream comprising hydrogen and carbon dioxide thereby generating a carbon dioxide stream that may be sequestered or used for enhanced oil recovery and a hydrogen stream that may be used as fuel for a power plant thereby generating electricity.

US 3,614,872 describes a super-atmospheric autorefrigeration process for separating a gaseous mixture comprising essentially hydrogen (H₂) and carbon dioxide (CO₂) into an enriched H₂ product stream and an enriched CO₂ product stream. The gaseous feed stream at a pressure of about 40 to 250 atmospheres is cooled so that 30 to 95% of the carbon dioxide is condensed by non-contact counterflow heat exchange with refrigerants, and liquid carbon dioxide is then separated from the uncondensed gases. The two departing product streams are separately employed as refrigerants to cool said fractions of the feed stream. The temperature of the enriched CO₂ product stream may be further reduced by expansion to about the triple point of carbon dioxide without solid formation. A portion of the enriched CO₂ product stream is recycled to the inlet of the process and combined with the feed stream to improve the separation efficiency of the system. However, the process of US 3,614, 872 does not achieve the high carbon dioxide capture level that is required for CO₂ sequestration. Thus, depending upon the pressure, about 30 to 95% of the CO₂ in the feed gas is condensed along with about 4% of the H₂, 90% of the H₂S and minor amounts of CO, CH₄, and N₂. Thus, the enriched H₂ product stream contains an unacceptable amount of CO₂ for it to be used as a decarbonised fuel in a power plant. Also, unacceptable amounts of H₂ are lost in the enriched CO₂ product stream.

US 7,201,019 provides a method of separating at least one light component (for example, helium, hydrogen, neon or mixtures thereof) from a CO₂ containing gaseous mixture containing at least about 30 mole percent CO₂. In the process of US 7,201,019, a pressurized feed stream that is composed of the gaseous CO₂ containing mixture is cooled such that the pressurised feed stream is partially condensed to form a first two-phase stream. The first two-phase stream is degasified to produce a first vapour stream enriched in the at least one light component and a first liquid stream containing an entrained fraction of the at least one light component. A second two-phase stream is created by at least expanding the first liquid stream to create a second two-phase stream. The second two-phase stream is then degasified to produce a second vapour stream enriched in the at least one light component and a second liquid stream having a rich CO₂ content. The description of US 7,201,109 focuses on the purification of helium. It is said that the degree of processing and therefore the expense involved in producing purified helium streams decreases with the amount of CO₂ present within the feed as contrasted with light components of more comparable boiling point to helium. As such, the process becomes increasingly more attractive as the CO₂ content increases, for instance, above 50 mole percent and more preferably above 90 mole percent. However, US 7,201,019 does not discuss any methods of increasing the CO₂ content of the feed stream. Further, it is stated that the isolated liquid component(s), after repressurisation and vaporization, can be returned to an enhanced oil recovery process, a pipeline or to high pressure storage. Further processing of the vaporized liquid, in a proper case, can be used to obtain merchant CO₂. The vapour enriched in the light component can also be further processed to isolate the light component, for instance, helium. However, where the light component is helium, the vapour stream may not be sufficiently enriched in the light component. Thus, it may be necessary to cool the vapour stream to generate a third two-phase stream that is separated to form a third liquid stream and a third vapour stream. The third vapour stream may contain a relatively high amount of CO₂ of between about 15 and 30 mole%. Accordingly, this third vapour stream may be directed to an ambient temperature CO₂ separation system which can be an amine absorption system or a pressure swing adsorption system where essentially all of the CO₂ contained in the vapour stream is removed and may exit the process as a vent stream, being at too low a pressure and flow rate to be profitably recovered (in general). The amine absorber overhead, contains a trace amount of CO₂ and will be saturated by water. It is said that these contaminants can be removed to produce a purified helium containing stream. Accordingly, the person skilled in the art would have concerns that if the process of US 7,201,019 was used to separate H₂ from a CO₂ containing gas mixture that the vapour enriched in the light component may contain unacceptable amounts of CO₂ for this stream to be used (without further purification) as a decarbonised fuel stream for a power plant.

International Patent Application No. WO 2004/089499 relates to configurations and methods of acid gas removal from a feed gas, and especially removal of carbon dioxide and hydrogen sulfide from synthesis gas (syngas). In particular, WO 2004/089499 describes a plant that includes a membrane separator that receives a sulphur-depleted syngas and separates hydrogen from a carbon dioxide-containing reject gas. An autorefrigeration unit is preferably fluidly coupled to the membrane separator and receives the carbon dioxide-containing reject gas, wherein the autorefrigeration unit produces a carbon dioxide product and a hydrogen-containing off gas, and a combustion turbine receives the hydrogen-containing off-gas. In one especially preferred configuration, a shifted and desulfurised syngas is passed through a membrane separation unit to separate hydrogen from a carbon dioxide-rich reject gas, which is dried and liquefied using an autorefrigeration process. The hydrogen from the membrane separation unit is recompressed and then fed (optionally in combination with the autorefrigeration offgas) to the turbine combustor. In most preferred aspects, the turbine combustor is operationally coupled to a generator that produces electrical energy, and heat of the flue gas is extracted using a heat recovery steam generator (HRSG) that forms high pressure steam to drive a steam turbine generator. According to WO 2004/089499, the high operating pressure of the syngas that is fed to the membrane package is advantageously utilized to produce a permeate gas. However, the pressure of the syngas feed to the membrane package is not specified. The permeate gas is rich in hydrogen and has a pressure of about 100 psia (6.9 bara). The residual gas stream, enriched in CO₂, does not permeate the membrane. This residual gas stream is said to be cooled in a heat exchanger 350 (e.g. with an external refrigerant (propane) and an off gas vapour) and separated into a liquid CO₂ portion and vapour portion, which is further expanded in expander 360. The expanded vapour portion (which has been cooled by the Joule Thomson effect) is again separated to form a second liquefied CO₂ product, which is combined to form a liquefied CO₂ stream and a hydrogen-containing offgas that is employed in the heat exchanger (350) as internal refrigerant before being sent to a combustion turbine as fuel. It is said that the expansion energy recovered from the residual gas stream can be advantageously be used in the recompression of the hydrogen-rich permeate in a compressor. The so compressed hydrogen-rich permeate may then be combined with the hydrogen-containing off gas and used as fuel in a combustion turbine. Accordingly, the autorefrigeration process of WO 2004/089499 provides two product streams from the syngas, a liquefied carbon dioxide stream, capturing about 70% of the total carbon dioxide in the shift effluent and a hydrogen rich off gas stream (that therefore retains about 30% of the total carbon dioxide in the shift effluent). The carbon dioxide stream can be pumped to approximately 2000 psia and used for Enhanced Oil Recovery (EOR). It said that at least part of the CO₂ can also be employed as a refrigerant (e.g. in a cold box or exchanger 350 to reduce power consumption). However, there is no detailed discussion of the use of the liquefied CO₂ stream as internal refrigerant. The permeate gas from the membrane is re-compressed to approximately 350 psia and mixed with the hydrogen-rich stream from the autorefrigeration process. However, the power required to compress hydrogen is said to be considerable.

In summary, WO 2004/089499 teaches: (a) the permeate gas from the membrane (hydrogen rich stream) and the hydrogen rich off gas stream from the heat exchanger are at low pressure and require re-compression prior to being passed to the combustor of a gas turbine; (b) the process captures only about 70 % of the total carbon dioxide in the shift effluent; (c) the process employs an external refrigerant in addition to an internal refrigerant; (d) at least part of the liquid CO₂ can also be used as refrigerant (in heat exchanger 350). However, WO 2004/089499 does not describe a process where the refrigeration duty is provided solely by the use of liquid CO₂ as internal refrigerant.

It has now been found that by feeding a shifted synthesis gas stream to a membrane separation unit at a pressure of at least 50 bar gauge that the hydrogen rich permeate stream may be fed directly to the combustor of a gas turbine without any requirement to recompress the hydrogen. It has also been found that the residual gas stream (carbon dioxide enriched stream) from the membrane separation unit may be cooled using at least one, preferably, at least two internal refrigeration stages such that the hydrogen containing off gas is also obtained at above the operating pressure of the combustor of the gas turbine.

Thus, the present invention provides a process for separating hydrogen and carbon dioxide from a synthesis gas stream comprising carbon dioxide and hydrogen, said process comprising:
(A) feeding a shifted synthesis gas stream at a pressure of at least 50 bar gauge to at least one membrane separator unit that is provided with a membrane having a selectivity for H₂ over CO₂ of greater than 16 and withdrawing a hydrogen enriched permeate stream having a CO₂ content of less than 10 mole % and a carbon dioxide enriched retentate stream comprising at least 63 mole % CO₂, preferably, at least 70 mole % CO₂ from the membrane separator unit;
(B) feeding the carbon dioxide enriched retentate stream to a carbon dioxide condensation plant where the retentate stream is cooled to condense out liquid CO₂ by:
   (i) passing the carbon dioxide enriched retentate stream through a heat exchanger where the retentate stream is cooled to a temperature below the dew point of the retentate stream but above the triple point of CO₂ by heat exchange with an internal refrigerant stream thereby forming a two-phase stream comprising a liquid CO₂ phase and a vapour phase that is enriched in hydrogen compared with the retentate stream wherein the internal refrigerant stream is a cooled liquid CO₂ stream that is subsequently produced in the process and the cooled liquid CO₂ stream is vaporized in the heat exchanger thereby forming a CO₂ vapour stream;
   (ii) passing the two-phase stream from step (i) to a separator vessel wherein the liquid phase is separated from the vapour phase and withdrawing a liquid CO₂ stream and a hydrogen enriched vapour stream from the separator vessel;
   (iii) if the CO₂ content of the hydrogen enriched vapour stream is greater than 10 mole %, passing the vapour stream through a further heat exchanger where the vapour stream is cooled to a temperature below the dew point of the vapour stream but above the triple point of CO₂ by heat exchange with a further internal refrigerant stream thereby forming a further two-phase stream comprising a liquid CO₂ phase and a vapour phase that is further enriched in hydrogen compared with the carbon dioxide enriched retentate stream wherein the internal refrigerant stream is a cooled liquid CO₂ stream that is subsequently produced in the process and the cooled liquid CO₂ stream is vaporized in the further heat exchanger thereby forming a further CO₂ vapour stream;
   (iv) passing the two-phase stream from step (iii) to a further separator vessel wherein the liquid phase is separated from the vapour phase and withdrawing a liquid CO₂ stream and a hydrogen enriched vapour stream from the further separator vessel; and
   (v) if necessary, repeating steps (iii) to (iv) until the CO₂ content of the hydrogen enriched vapour stream that is withdrawn from the further separator vessel is less than 10 mole %;
(C) passing the hydrogen enriched vapour stream having a CO₂ content of less than 10 mole % that is formed in step (B) and/or the hydrogen enriched permeate stream having a CO₂ content of less than 10 mole % that is formed in step (A) as a fuel feed stream to the combustor of at least one gas turbine of a power plant at a pressure above the operating pressure of the gas turbine(s) for the production of electricity;
(D) compressing the CO₂ vapour stream(s) that are formed by vaporisation of the internal refrigerant stream(s) in step (B) thereby forming a compressed CO₂ stream wherein the pressure of the compressed CO₂ stream is above the critical pressure for CO₂ and wherein the CO₂ is either in a supercritical state or a liquid state when the temperature of the compressed CO₂ stream is above or below the critical temperature for CO₂ respectively; and
(E) sequestering the compressed CO₂ stream.

A synthesis gas stream may be generated from a solid fuel such as petroleum coke or coal in a gasifier or from a gaseous hydrocarbon feedstock in a reformer. The synthesis gas stream from the gasifier or reformer contains high amounts of carbon monoxide. Accordingly, the synthesis gas stream is treated in a shift converter unit to generate a shifted synthesis gas stream. In the shift converter unit, substantially all of the carbon monoxide contained in the synthesis gas stream is converted to carbon dioxide over a shift catalyst according to the water gas shift reaction (WGSR)

CO +H₂O → CO₂ + H₂.

The shift converter unit may be a single shift reactor containing a shift catalyst. However, it is preferred that the shift converter unit comprises a high temperature shift reactor containing a high temperature shift catalyst and a low temperature shift reactor containing a low temperature shift catalyst. The water gas shift reaction is exothermic and results in a significant temperature rise across the shift converter unit. Accordingly, the shift converter unit may be cooled by continuously removing a portion of the shifted synthesis gas stream and cooling this stream by heat exchange with one or more process streams, for example against boiler feed water or steam (for the generation of superheated steam).

The shifted synthesis gas stream comprises primarily hydrogen, carbon dioxide and steam and minor amounts of carbon monoxide and methane. Where the shifted synthesis gas stream is derived from a gasifier, the shifted synthesis gas will also comprise minor amounts of hydrogen sulfide (H₂S) that is formed by reaction of COS with steam in the shift converter unit.

The shifted synthesis gas stream may be cooled upstream of the membrane separation unit(s) to condense out a condensate (predominantly comprised of water). Typically, the condensate is separated from the cooled shifted synthesis gas stream in a condensate drum. After removal of condensate, the shifted synthesis gas stream is passed to at least one membrane separation unit that is provided with a hydrogen selective membrane that separates the H₂ enriched permeate stream from the CO₂ enriched retentate stream. Typically, a plurality of membrane separation units are arranged in parallel. The number of membrane separation units will be dependent upon the desired membrane area. Typically, the membrane separation unit(s) is provided with a spiral wound membrane or a plurality of hollow fibre membranes. The membrane employed in the membrane separation unit(s) is selective for hydrogen over carbon dioxide such that hydrogen selectively passes through the membrane owing to its diffusivity (size) and/or solubility in the material that comprises the membrane. There are many types of membrane available that are selective for hydrogen over carbon dioxide, including polymeric membranes such as polybenzimidazole (PBI) membranes, microporous carbon membranes and membranes comprising palladium or palladium alloys on a supporting material. However, palladium or palladium alloy membranes may only be employed where the shifted synthesis gas does not contain significant amounts of sulphur containing impurities as these will degrade the palladium component of the membrane.

Preferably, the hydrogen selective membrane is a low temperature hydrogen selective membrane that is capable of operating at a temperature that is at or slightly above ambient temperature, for example, at a temperature in the range of 0 to 50°C, in particular, 20 to 40°C.

However, it may be preferred to operate certain hydrogen selective membranes (for example, PBI membranes or membranes comprising palladium or a palladium alloy supported on a support material) at higher temperatures as the H₂ permeability of these membranes has been found to increase significantly with temperature. Thus, it may be desirable to operate the membrane separation unit(s) a temperature of above 50°C, for example, at a temperature in the range of 75 to 400°C, preferably, 100 to 300°C.

It is envisaged that the hot shifted synthesis gas stream from the shift converter unit may be passed to the membrane separation unit(s) without cooling to condense out a condensate. Accordingly, the water that is contained in the hot shifted synthesis gas is in a vapour state (steam). Typically, at least a portion of the steam that is contained in the hot shifted synthesis gas will pass through the membrane together with the hydrogen. The presence of steam in the H₂ enriched permeate stream may be advantageous as this may reduce NOₓ emissions from the combustor of the gas turbine(s). Typically, a diluent, for example, nitrogen, is added to the fuel feed stream that is fed to the combustor of the gas turbine(s). Thus, a further advantage of the presence of steam in the H₂ enriched permeate stream is that this reduces the required dilution. Accordingly, there may be no requirement to remove the steam from the permeate stream. The CO₂ enriched retentate stream that is removed from the membrane separation unit(s) is at elevated temperature and is cooled downstream of the membrane separation unit(s), for example, against water, before entering the CO₂ condensation plant. Where significant amounts of steam are retained in the CO₂ enriched retentate stream, cooling of the retentate stream will condense out a condensate (predominantly water) that is removed, for example, in a condensate drum.

The presence of steam in the hot shifted synthesis gas lowers the H₂ partial pressure of the feed to the membrane separation unit(s). Accordingly, it is also envisaged that the feed to the membrane separation unit(s) is a cooled shifted synthesis gas stream (as described above) that has subsequently been reheated to the desired membrane operating temperature, for example, 75 to 400°C. Thus, condensate (predominantly water) is removed from the shifted synthesis gas stream upstream of the membrane separation unit. The cooled shifted synthesis gas stream may be reheated against a hot process stream or steam.

The shifted synthesis gas stream is fed to the membrane separation unit(s) at a pressure of at least 50 barg, preferably, at a pressure of at least 60 barg. If necessary, the pressure of the shifted synthesis gas stream is boosted to the desired operating pressure of the membrane separation unit(s). Thus, a compressor may be installed upstream of the membrane separation unit(s). Typically, the CO₂ enriched retentate stream may be withdrawn from the membrane separation unit(s) at a pressure that is 2 to 3 bar below the pressure of the shifted synthesis gas feed stream. The person skilled in the art will understand that there is a pressure drop across the membrane of the membrane separation unit(s). Typically, the pressure drop across the membrane is in the range of 10 to 30 bar. Preferably, the H₂ enriched retentate stream is withdrawn from the membrane separation unit(s) at a pressure that is above the operating pressure of the gas turbine(s) of the power plant (see below).

The hydrogen selective membrane that is employed in the membrane separation unit(s) has a H₂ selectivity (over CO₂) of greater than 16, in order to prevent significant quantities of CO₂ from entering the hydrogen enriched permeate stream as this would reduce the CO₂ capture level. Preferably the hydrogen selectivity of the membrane is greater than 20, in particular greater than 40. Typically, the CO₂ content of the hydrogen enriched permeate stream is less than 10 mole %, preferably, less than 5 mole%, in particular, less than 2 mole%. Typically, the CO₂ content of the CO₂ enriched retentate stream is in the range of 63 to 85 mole%, preferably, 70 to 85 mole%.

In order to improve the performance of the hydrogen selective membrane a sweep gas comprising nitrogen and/or steam may be added to the permeate stream. The addition of the sweep gas reduces the hydrogen partial pressure of the permeate stream and therefore improves the separation efficiency. In addition, where nitrogen is employed as the sweep gas, this will dilute the hydrogen enriched stream to the level required for combustion in the combustor of the gas turbine(s).

A discussed above, where the shifted synthesis gas stream is derived by gasification of petroleum coke or coal in a gasifier, the shifted synthesis gas will contain H₂S as an impurity (sour shifted synthesis gas). An advantage of the process of the present invention is that it allows the capture of the H₂S in addition to carbon dioxide (CO₂). Any H₂S that is captured may be either converted into elemental sulphur using the Claus Process or into industrial strength sulphuric acid. Typically, the H₂S may be captured either upstream or downstream of the membrane separation unit. For example, the H₂S may be selectively absorbed from the sour shifted synthesis gas stream in an absorption tower arranged upstream of the membrane separation unit(s). Alternatively, H₂S may be selectively absorbed from the CO₂ enriched retentate stream in an absorption tower arranged downstream of the membrane separation unit. Typically, Selexol™ (a mixture of dimethyl ethers of polyethylene glycol) may be employed as the absorbent. Where the feed to the membrane separation unit(s) is a sour shifted synthesis gas, it is envisaged that a portion of the H₂S may pass through the hydrogen selective membrane such that the hydrogen enriched permeate stream contains H₂S as an impurity. Accordingly, the hydrogen enriched permeate stream is passed through a bed of a solid absorbent that is capable of absorbing H₂S, for example, a bed of zinc oxide, thereby desulfurising the hydrogen enriched permeate stream.

After removal of any condensate (see above), the CO₂ enriched retentate stream is dried prior to being passed to the CO₂ condensation plant as any moisture in the CO₂ enriched retentate stream will freeze and potentially cause blockages in the plant. The CO₂ enriched retentate stream may be dried by being passed through a molecular sieve bed or an absorption tower that employs triethylene glycol to selectively absorb the water. Preferably, the dried CO₂ enriched retentate stream has a water content of less than 1 ppm (on a molar basis).

Preferably, the dried CO₂ enriched retentate stream is passed to a pre-cooling heat exchanger of the CO₂ condensation plant where the retentate stream is pre-cooled against a cold stream (for example, cold water or a cold process stream such as a slip stream from the dense phase CO₂ product stream or a cold H₂ enriched vapour stream). Typically, the retentate stream is pre-cooled to a temperature of 0 to 10°C, for example, about 2°C. Depending upon the composition of the CO₂ enriched retentate stream, the pre-cooled stream may remain in a vapour state or may be cooled to below its dew point thereby becoming two phase.

The retentate stream is then passed through at least one cryogenic separation stage of the CO₂ condensation plant, preferably, through a plurality of cryogenic separation stages that are arranged in series. Each cryogenic separation stage comprises a heat exchanger and a gas-liquid separation vessel (for example, a flash vessel). Preferably, the CO₂ condensation plant comprises 2 to 10, more preferably, 4 to 8, for example, 5 to 7 cryogenic separation stages arranged in series.

Where the CO₂ condensation plant comprises a plurality of cryogenic separation stages arranged in series, the separator vessels of the cryogenic separation stages are generally operated at substantially the same pressure but at successively lower temperatures. Thus, the pressure drop across the cryogenic separation stages is typically in the range of 2 to 10 bar, preferably, 2 to 5 bar, in particular, 2 to 3 bar. However, higher pressure drops may be tolerated (for example, pressure drops in the range of 10 to 30 bar, preferably 10 to 20 bar) provided that the H₂ enriched vapour stream that is removed from the separator vessel of the final cryogenic separation stage is above the feed pressure for the gas turbine(s) of the power plant.

The operating temperature of each cryogenic separation stage will depend on the number of cryogenic separation stages and the desired carbon dioxide capture level. There is a limit on the lowest temperature in the final cryogenic separation stage, as the temperature must be maintained above a value where solid CO₂ will form. This typically occurs at a temperature of -56°C (the triple point for pure CO₂ is at 5.18 bar and at a temperature of 56.4°C) although the presence of H₂ may depress this freezing point. In addition, there is an upper limit on the pressure of the cryogenic separation stages. Thus, the pressure must be below the cricondenbar (typically, about 73 bara) for the feed streams to each of the separation stages. By cricondenbar is meant the highest pressure at which a liquid and gaseous phase may co-exist. This is dependent upon the composition of the feed streams to the cryogenic separation stages.

Where the CO₂ condensation plant comprises a plurality of cryogenic separation stages, it is envisaged that an internal refrigerant may be employed as refrigerant in the heat exchangers of each cryogenic separation stage (hereinafter referred to as "internal refrigerant cryogenic separation stage"). Alternatively, the CO₂ condensation plant may comprise at least one cryogenic separation stage having a heat exchanger that employs an external refrigerant (hereinafter "external refrigerant cryogenic separation stage"). Typically, at least one external refrigerant cryogenic separation stage, preferably, a series of external refrigerant cryogenic separation stages, is arranged upstream of at least one internal refrigerant cryogenic separation stage, preferably, a series of internal refrigerant cryogenic separation stages.

By "internal refrigerant" is meant a liquid CO₂ stream that is subsequently produced in the process of the present invention. Typically, the internal refrigerant(s) is generated by:
(i) expanding a liquid CO₂ stream (that is produced in the process of the present invention) to lower pressure through a Joule-Thomson valve thereby forming a cooled two phase stream;
(ii) passing the cooled two phase stream to a separator vessel where a vapour phase comprising gaseous CO₂ separates from a liquid phase comprising liquid CO₂; and
(iii) withdrawing a cooled liquid CO₂ stream from the gas-liquid separator and employing this liquid CO₂ stream as internal refrigerant in step (A);

The person skilled in the art will understand that the internal refrigerants for the plurality of internal refrigerant cryogenic separation stages that are arranged in series are at successively lower temperatures. The person skilled in the art will also understand that the temperature of an internal refrigerant will be dependent upon the pressure drop across the Joule Thomson valve (the greater the pressure drop the greater the amount of cooling). In addition, the temperature of an internal refrigerant will be dependent on the initial temperature of the liquid CO₂ stream that is flashed across the Joule Thomson valve. Accordingly, the temperature of the liquid CO₂ stream and the pressure drop across the Joule Thomson valve are selected to achieve refrigerants of the desired temperatures.

The liquid CO₂ stream that is flashed across the Joule Thomson valve to generate an internal refrigerant may be a liquid CO₂ stream withdrawn from the separation vessel of a single internal refrigerant cryogenic separation stage of the CO₂ condensation plant. Alternatively, the liquid CO₂ stream that is flashed across the Joule Thomson valve to generate an internal refrigerant may be a combined liquid CO₂ stream comprising two or more liquid CO₂ streams withdrawn from the separation vessels of two or more internal refrigerant cryogenic separation stages. It is also envisaged that the liquid CO₂ stream that is flashed across the Joule Thomson valve may be formed by mixing a combined liquid CO₂ stream with one or more liquid CO₂ streams withdrawn from the separation vessels of one or more internal refrigerant cryogenic separation stages or with another combined liquid CO₂ stream. Thus, the combined stream that is flashed across the Joule Thomson valve is of intermediate temperature compared with the temperatures of the component liquid CO₂ streams. It is preferred that the temperature difference between the component liquid CO₂ streams that are combined to form the combined liquid CO₂ stream is less than 20°C, preferably less than 16°C, for example, less than 12°C.

By "external refrigerant" is meant a refrigerant that is formed in an external refrigeration circuit. Suitable external refrigerants that may be used as refrigerant in the heat exchanger(s) of the external refrigerant separation stages(s) include propane, ethane, ethylene and ammonia. The external refrigerant(s) may be regenerated in an external refrigerant circuit(s) using any method known to the person skilled in the art, including methods known in the production of liquefied natural gas.

The process of the present invention will now be described with respect to a CO₂ condensation plant that comprises a plurality of internal refrigerant cryogenic separation stages arranged in series. The retentate stream is passed through the heat exchanger of the first internal refrigerant cryogenic separation stage where the retentate stream is cooled to below its dew point against an internal refrigerant (a liquid CO₂ stream that is subsequently produced in the process) thereby forming a two phase stream comprising a liquid phase (substantially pure liquid CO₂) and a vapour phase (comprising H₂ and residual CO₂). The two phase stream is then passed to the gas-liquid separator vessel (for example, a flash vessel) of the first internal refrigerant cryogenic separation stage where the liquid phase is separated from the vapour phase. A hydrogen enriched vapour stream and a liquid CO₂ stream are withdrawn from the separator vessel, preferably, from at or near the top and bottom respectively of the separator vessel. The H₂ enriched vapour stream is used to feed a further internal refrigerant cryogenic separation stage where the vapour stream is passed through a further heat exchanger and is cooled to below its dew point against a further internal refrigerant (a liquid CO₂ stream subsequently produced in the process). The resulting two phase stream is passed to the gas-liquid separator vessel (preferably, a flash vessel) of the further internal refrigerant cryogenic separation for separation of the phases. A vapour stream that is further enriched in H₂ and liquid CO₂ stream are withdrawn from the separator vessel, preferably, from at or near the top and bottom respectively of the separator vessel. These steps may be repeated until sufficient CO₂ has been captured from the H₂ enriched vapour stream (non-condensable stream) that is withdrawn from the final internal refrigerant cryogenic separation stage of the series. Thus, the feed to the second and any subsequent internal refrigerant cryogenic separation stage is the H₂ enriched vapour stream (non-condensable stream) that is separated in the preceding internal refrigerant cryogenic separation stage in the series. Typically, the CO₂ condensation plant comprises 3 to 9, preferably, 5 to 8, for example, 7 internal refrigerant cryogenic separation stages.

The process of the present invention will now be described with respect to a CO₂ condensation plant that comprises at least one external refrigerant cryogenic separation stage upstream of at least one internal refrigerant separation stage. The retentate stream is passed through the heat exchanger of the external refrigerant cryogenic separation stage where the retentate stream is cooled to below its dew point against an external refrigerant (propane or ammonia) thereby forming a two phase stream comprising a liquid phase (substantially pure liquid CO₂) and a vapour phase (comprising H₂ and residual CO₂). The two phase stream is then passed to the gas-liquid separator vessel (for example, a flash vessel) of the external refrigerant cryogenic separation stage where the liquid phase is separated from the vapour phase. A hydrogen enriched vapour stream and a liquid CO₂ stream are withdrawn from the separator vessel, preferably, from at or near the top and bottom respectively of the separator vessel. Optionally, the H₂ enriched vapour stream is used to feed one or more further external refrigerant cryogenic separation stage where the vapour stream is passed through a further heat exchanger and is cooled to below its dew point against a further external refrigerant (propane or ammonia). The H₂ enriched vapour stream that is withdrawn from the external refrigerant cryogenic separation stage (or the final external refrigerant cryogenic separation stage of a series) is used as feed to an internal refrigerant cryogenic separation stage where the vapour stream is passed through a heat exchanger and is cooled to below its dew point against an internal refrigerant (a CO₂ stream subsequently produced in the process). The resulting two phase stream is passed to the gas-liquid separator vessel (preferably, a flash vessel) of the internal refrigerant cryogenic separation stage for separation of the phases. A vapour stream that is further enriched in H₂ and liquid CO₂ stream are withdrawn from the separator vessel, preferably, from at or near the top and bottom respectively of the separator vessel. If necessary, the vapour stream may be passed at one or more further internal refrigeration separation stages until sufficient CO₂ has been captured from the H₂ enriched vapour stream (non-condensable stream) that is withdrawn from the final cryogenic separation stage of the CO2 condensation plant. Typically, the CO₂ condensation plant comprises 3 to 7, preferably, 4 to 6, for example, 5 external refrigerant cryogenic separation stages and 1 to 4, preferably 2 or 3 internal refrigerant cryogenic separation stages.

The person skilled in the art will understand that the H₂ enriched vapour stream that is fed to the second cryogenic separation stage of the CO₂ condensation plant is of higher H₂ content than the CO₂ enriched retentate stream that is fed to the first cryogenic separation stage. Also, the H₂ enriched vapour stream that is fed to any further cryogenic separation stage(s) of the CO₂ condensation plant is of successively higher H₂ content. Where the H₂ enriched vapour stream that is withdrawn from the separator vessel of an intermediate cryogenic separation stage is sufficiently enriched in hydrogen (has a H₂ content of at least 40 mole%, preferably, at least 50 mole%), this H₂ enriched vapour stream may be passed to a membrane separation unit of the CO₂ condensation plant where a hydrogen selective membrane is used to separate a hydrogen enriched permeate stream from a CO₂ enriched retentate stream. The hydrogen enriched permeate stream may be combined with the hydrogen enriched permeate stream from the membrane separation unit upstream of the CO₂ condensation plant. The CO₂ enriched retentate stream is then used as feed to a further cryogenic separation stage of the CO₂ condensation plant. The use of a membrane separator unit within the CO₂ condensation plant may allow the elimination of one or more cryogenic separation stages or allow the subsequent cryogenic separation stage(s) to be operated at a higher temperature thereby reducing the refrigeration duty. It is envisaged that the CO₂ condensation plant may comprise more than one membrane separation unit. For example, the CO₂ condensation plant may comprise at least one cryogenic separation stage upstream of a first membrane separation unit, at least one cryogenic separation stage downstream of the first membrane separation unit and upstream of a second membrane separation unit and at least one cryogenic separation stage downstream of the second membrane separation unit. If necessary, the H₂ enriched vapour feed to the membrane separation unit(s) of the CO₂ condensation plant is heated to above the operating temperature of the hydrogen selective membrane. It may therefore be necessary to subsequently cool the CO₂ enriched retentate stream that is formed in the membrane separation unit before passing the CO₂ enriched retentate stream to a subsequent cryogenic separation stage.

Typically, the hydrogen enriched vapour stream (non-condensable stream) from the final cryogenic separation stage of the CO₂ condensation plant comprises at least 90 mole% hydrogen, preferably, at least 95% hydrogen, more preferably, at least 98 mole % hydrogen, in particular, at least 99 mole % hydrogen (depending upon the desired carbon dioxide capture level), the remainder being mostly carbon dioxide. Typically, the amount of CO₂ contained in the H₂ enriched vapour stream (non-condensable stream) that is removed from the final cryogenic separation stage of the CO₂ condensation plant is less than 10 mole%, preferably, less than 5 mole%, more preferably, less than 2 mole %, in particular, less than 1 mole %. This hydrogen enriched stream may also comprise trace amounts of carbon monoxide (CO) and methane, for example, less than 500 ppm on a molar basis. The H₂ enriched vapour stream from the CO₂ condensation plant may be combined with the H₂ enriched permeate stream from the membrane separator unit(s) to form a fuel stream that is fed to the combustor of at least one gas turbine that drives an electric generator thereby producing electricity. However, it is also envisaged that the H2 enriched vapour stream from the CO₂ condensation plant and the H2 enriched permeate stream from the membrane separator unit(s) may be passed to dedicated gas turbines of the power plant.

An advantage of the process of the present invention is that the hydrogen enriched permeate stream from the membrane separation unit is at a pressure higher than the operating pressure of the gas turbine(s) of the power plant. In addition, the hydrogen enriched vapour stream (non-condensable stream) from the CO₂ condensation plant is obtained at a pressure higher than the operating pressure of the gas turbine(s). Accordingly, there is no requirement for a gas compressor to compress the hydrogen fuel stream to above the operating pressure of the combustor of the gas turbine. Typically, the combustor of the gas turbine has an operating pressure in the range of 25 to 45 barg, preferably, 30 to 40 barg. Typically, the H₂ enriched vapour stream (non-condensable stream) from the CO₂ condensation plant is at a pressure greater than the operating pressure of the gas turbine(s). Accordingly, the hydrogen enriched vapour stream is expanded in an expander down to the inlet pressure of the gas turbines. The expansion energy recovered from the H₂ enriched vapour stream in the expander can be converted into power for export or for use within the process (e.g. to drive the CO₂ pumps).

Preferably, the hydrogen fuel stream that is fed to the combustor of the gas turbine(s) contains 35 to 65% by volume hydrogen, more preferably, 45 to 60% by volume hydrogen, for example, 48 to 52% by volume of hydrogen. It is envisaged that the hydrogen stream may comprise trace amounts of carbon oxides (CO and CO₂) and of methane. The remainder of the hydrogen fuel stream is nitrogen and/or steam arising from the sweep gas and/or added as a diluent to the hydrogen fuel stream.

The exhaust gas from the gas turbine(s) is passed to a heat recovery and steam generator unit (HRSG) where the exhaust gas may be heat exchanged with various process streams. Optionally, the temperature of the exhaust gas of the gas turbine is increased by providing the HRSG with a post-firing system, for example, a post-firing burner. Suitably, the post-firing burner is fed with a portion of the hydrogen fuel stream and the hydrogen fuel stream is combusted in the burner using residual oxygen contained in the exhaust gas. Suitably, the exhaust gas is raised in temperature in the post-firing system to a temperature in the range of 500 to 800°C.

Typically, the HRSG generates and superheats steam for use in at least one steam turbine and elsewhere in the process of the present invention. Typically, the HRSG is capable of generating high pressure (HP) steam, medium pressure (MP) steam and low pressure (LP) steam and of superheating these steam streams. The HRSG may also be capable of reheating MP steam that is produced as an exhaust stream from the high pressure stage of a multistage steam turbine. In addition, the HRSG may be used to heat boiler feed water (for example, boiler feed water that is fed to the waste heat boiler of a shift converter unit).

The cooled exhaust gas is discharged from the HRSG to the atmosphere through a stack. Preferably, the stack is provided with a continuous emission monitoring system for monitoring, for example, the NOₓ content of the cooled exhaust gas.

The liquid CO₂ streams that are withdrawn from the separator vessels of the cryogenic separation stage(s) preferably comprises at least 95 mole% CO₂, in particular, at least 98 mole % CO₂, the remainder being mostly hydrogen with some inerts, for example, nitrogen and/or CO.

Where the CO₂ condensation plant comprises a plurality of internal refrigerant cryogenic separation stages arranged in series (and no external refrigerant cryogenic separation stages), the refrigeration duty of the plant is such that substantially all of the liquid CO₂ that is produced in the process is required to generate the internal refrigerants for the cryogenic separation stages. The CO₂ vapour streams that are withdrawn from the heat exchangers of the internal refrigerant cryogenic separation stages are compressed in a series of compressors (compression chain) to the pipeline delivery pressure (above the critical pressure for CO₂) thereby forming either a supercritical CO₂ stream or a liquid CO₂ stream (where the temperature of the compressed stream is either above or below the critical temperature for CO₂ respectively) that is delivered to a reception facility of an oil field where the CO₂ stream is used as an injection fluid. If necessary, this CO₂ stream is further compressed to above the pressure of the hydrocarbon-bearing formation of the oil field before being injected into the hydrocarbon-bearing formation. The injected CO₂ displaces the hydrocarbons towards an associated production well for enhanced recovery of hydrocarbons therefrom. If any gaseous carbon dioxide is produced from the production well together with the hydrocarbons, the gaseous carbon dioxide may be separated from the hydrocarbons for re-injection into the hydrocarbon-bearing formation such that the CO₂ is sequestered in the hydrocarbon-bearing formation. It is also envisaged that the CO₂ stream may be injected into other subterranean formations (for example, an aquifer) or into a cavern for storage therein.

Where the CO₂ condensation plant comprises at least one internal refrigerant cryogenic separation stage and at least one internal refrigerant cryogenic separation stage, the CO₂ vapour stream that is withdrawn from the internal refrigerant cryogenic separation stage(s) is compressed, as described above, for delivery by pipeline to a reception facility of an oil field. However, not all of the liquid CO₂ that is produced in the process is required to generate internal refrigerant. Accordingly, at least a portion of the liquid CO₂ that is withdrawn from the separation vessel(s) of the external refrigerant separation stage(s) is pumped to pipeline pressure. Suitably, the compressed CO₂ (that is in either a liquid or supercritical state) is commingled with the liquid CO₂ after it has been pumped to pipeline pressure.

The process of the present invention will now be illustrated by reference to Figures 1 to 5.
Figure 1 is a block flow diagram that illustrates the production of a shifted synthesis gas stream comprising hydrogen and carbon dioxide and the separation of a hydrogen enriched fuel stream from a carbon dioxide enriched stream using a hydrogen selective membrane separation unit upstream of a CO₂ condensation plant wherein the refrigeration duty is provided by an internal refrigerant.
Figure 2 provides a more detailed view of the membrane separation unit and the CO₂ condensation plant of Figure 1.
Figure 3 is a block flow diagram that illustrates a modified scheme for separating a hydrogen enriched fuel stream from a carbon dioxide enriched stream in which the CO₂ condensation plant has both an external refrigeration stage and an internal refrigeration stage.
Figure 4 provides a more detailed view of the membrane separation unit and the CO₂ condensation plant of Figure 3.
Figure 5 is a block flow diagram that illustrates a modified scheme for separating a H₂ enriched fuel stream from a CO₂ enriched stream in which a second hydrogen selective membrane separation unit is provided within the CO₂ condensation plant *(please provide* *Figure 5**).*

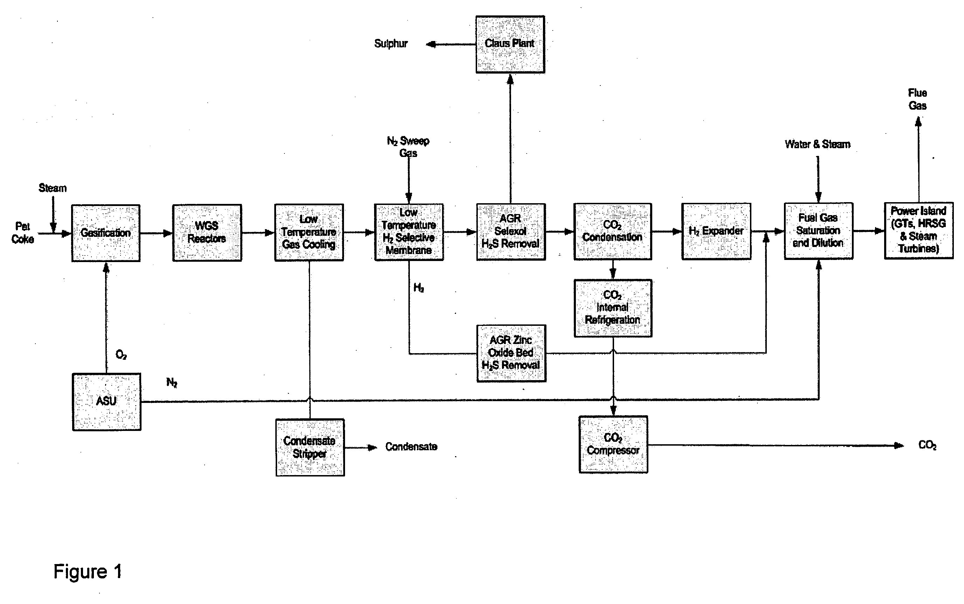

In Figure 1, a fuel, either petroleum coke or coal, is pre-processed (crushed and slurried with water) prior to being sent to a gasifier. Steam is added to the petroleum coke or coal upstream of the gasifier. In addition, oxygen is fed into the gasifier from an Air Supply Unit (ASU) thereby providing heat to the gasification process and partially oxidising the fuel. The ASU also provides a source of nitrogen which is used as a diluent for the hydrogen fuel stream that is fed to the gas turbines (GTs) of a Power Island. The gasifier converts the petroleum coke or coal fuel to a synthesis gas stream (commonly known as syngas), which is a mixture of predominantly hydrogen (H₂), carbon monoxide (CO), carbon dioxide (CO₂), hydrogen sulfide (H₂S), COS, water (steam) and other minor impurities (inerts and heavy metals).

In order to convert the syngas to a mixture of predominantly CO₂ and hydrogen, the syngas is passed to Water Gas Shift (WGS) reactors. Depending on the amount of H₂S in the petroleum coke or coal fuel, these WGS reactors may be sour WGS reactors, and will convert CO to CO₂ and COS to H₂S. Typically, the number of WGS reactors will be dependent on the amount of CO generated from the gasifier and the level of CO₂ capture the plant is aiming to achieve. Typically, two stages of WGS are used.

The sour shifted syngas from the WGS Reactors is then subjected to Low Temperature Gas Cooling to knock out water contained in the sour shifted syngas. Typically, this is achieved by cooling the sour shifted syngas to a temperature of approximately 30 to 40°C in a heat exchanger against boiler feed water thereby generating steam. Cooling results in condensation of the majority of the water which is separated in a knock-out drum. In practise, cooling of the sour shifted syngas generates two steam streams, low pressure (LP) steam and medium pressure (MP) steam. These steam streams may be used in the upstream plant (gasifier) or sent to a steam turbine for electricity generation. The water that is separated in the knock-out drum will contain trace amounts of CO₂ and other impurities. These impurities are stripped from the condensate in a Condensate Stripper. The remaining condensate (water) is then used as boiler feed water.

The shifted syngas from the Low Temperature Gas Cooling Stage is then sent, at a pressure of at least 50 barg, preferably, at least 60 barg, to at least one Low Temperature (LT) Hydrogen Selective membrane separation unit(s). The membrane employed in the membrane separation unit(s) is selective for hydrogen over carbon dioxide such that hydrogen selectively passes through the membrane owing to its diffusivity (size) and/or solubility in the material that comprises the membrane. There are many types of membrane available that are selective for hydrogen over carbon dioxide, including polymeric membranes such as polybenzimidazole (PBI) membranes, microporous carbon membranes and membranes based on palladium or palladium alloys supported on a supported material. However, palladium or palladium alloy membranes may only be employed where the syngas does not contain significant amounts of sulphur compounds as these will degrade the palladium or palladium alloy.

In order to improve the performance of the membrane a nitrogen or steam sweep gas may be added to the permeate stream. The addition of the nitrogen or steam sweep gas reduces the hydrogen partial pressure and improves the separation efficiency. In addition, where nitrogen is employed as the sweep gas, this will dilute the hydrogen permeate stream to the level required for combustion in the gas turbine (GT) of the Power Island. Where the hydrogen permeate stream contains low amounts of H₂S impurity, the hydrogen permeate stream is passed through a H₂S absorbent, for example, a zinc oxide bed, prior to combustion of the hydrogen fuel stream in the GT.

The CO₂ enriched retentate stream from the membrane separation unit comprises at least 70 mole % CO₂ (typically, 70 to 80 mole% CO₂). Typically, this stream is sent to an Acid Gas Removal (AGR) plant where the H₂S is stripped from the CO₂ enriched stream via the use of a physical or chemical absorbent in an absorption tower. Typically Selexol™ (a mixture of dimethyl ethers of polyethylene glycol) is used as absorbent. The separated H₂S may be passed to a Claus plant for the production of elemental sulphur, or may be converted to sulphuric acid in a sulphuric acid plant.

The CO₂ enriched retentate stream is then dried, as any moisture in the retentate stream will cause freezing and blockages in downstream process equipment. Viable options for dehydrating the CO₂ enriched retentate stream include passing the gas through a molecular sieve bed or through an absorption tower that uses triethylene glycol (TEG) as absorbent. Typically, the water content of the dried CO₂ enriched retentate stream is less than 1 ppm (on a molar basis).

Once dehydrated, the CO₂ enriched retentate stream is sent to a CO₂ condensation plant that will liquefy the CO₂ in at least one cryogenic separation stage thereby forming an H₂ enriched vapour stream and at least one liquid CO₂ stream wherein the liquid CO₂ stream(s) are employed as internal refrigerant in the CO₂ condensation plant. Liquefaction of the CO₂ against the internal refrigerant will result in vaporization of the internal refrigerant. Accordingly, the CO₂ condensation plant will generate a CO₂ enriched vapour stream and a H₂ enriched vapour stream. The CO₂ enriched vapour stream is passed to a CO₂ compression chain that increases the pressure of the stream to the desired pipeline export pressure. Typically, the temperature and pressure of the resulting pipeline export stream are above the critical temperature and pressure for CO₂ such that the CO₂ is in a supercritical state. The supercritical CO₂ (dense phase CO₂) may be used for enhanced oil recovery.

The H₂ enriched vapour stream that is withdrawn from the CO₂ condensation plant comprises predominantly hydrogen and a small amount of CO₂ (generally at least 98 mol% hydrogen, preferably, at least 99 mole% hydrogen). This H₂ enriched vapour stream is at a high pressure (typically, at least 45 barg where the shifted synthesis gas is fed to the membrane separation unit(s) at a pressure of at least 50 barg or at least 55 barg where the shifted synthesis gas is fed to the membrane separation unit(s) at a pressure of at least 60 barg). Accordingly, the hydrogen enriched vapour stream is expanded in an expander down to the inlet pressure of the gas turbines (GTs) of the Power Island. The expansion energy recovered from the H₂ enriched vapour stream in the expander can be converted into power for export or for use within the plant (e.g. to drive the CO₂ compressors of the compression chain). The expanded hydrogen stream is then combined with the hydrogen permeate stream from the Low Temperature H₂ selective membrane separation unit before being sent to a Fuel Gas Saturation and Dilution Stage (saturation tower) where the stream is further diluted with steam and optionally nitrogen thereby generating a fuel stream comprising approximately 50 mol% hydrogen. Dilution of the fuel stream is required in order to control NO_{X} emissions and flame speeds. The fuel stream is then sent to the Power Island, where the fuel is combusted in air in the combustor of at least one modified gas turbine (GT). The GT can be used to drive an electric motor thereby generating electricity. The exhaust gas from the gas turbine is passed to a Heat Recovery Steam Generator (HRSG) where the exhaust is heat exchanged with boiler feed water thereby generating steam or with steam to generate superheated steam. Typically, three levels of steam (HP, MP or LP) can be generated from boiler feed water. The resulting steam streams may be combined with the petroleum coke or coal that is fed to the gasifier and/or may be used in a steam turbine that drives an electric generator thereby producing additional electricity. The exhaust gas from the HRSG is vented to atmosphere.

It is envisaged that the scheme of Figure 1 may be adapted for capturing CO₂ from syngas that is formed by reforming a gaseous hydrocarbon (in particular, methane) in a reformer. However, the gaseous hydrocarbon is desulfurised upstream of the reformer so as to avoid poisoning the reforming catalyst. Accordingly, the shifted syngas does not contain any H₂S impurity.

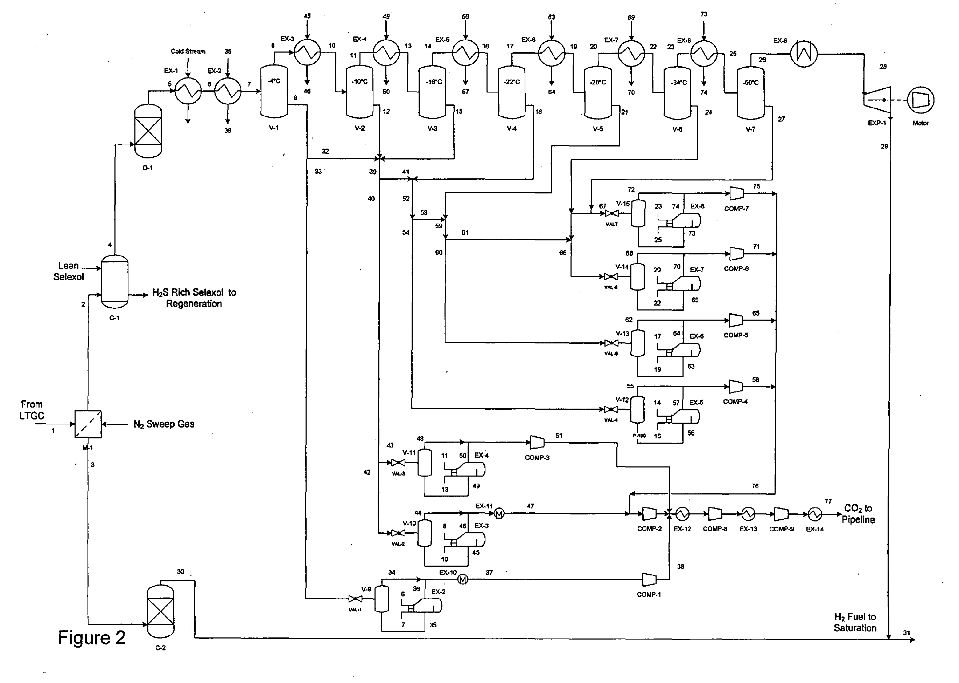

Figure 2 shows a detailed process flow diagram for the hydrogen selective membrane separation unit(s) and the CO₂ condensation plant of the block diagram outlined in Figure 1. A shifted synthesis gas stream 1 is fed at a pressure of at least 50 barg, preferably at least 60 barg, to at least one membrane separation unit M-1, preferably a plurality of membrane separation units arranged in parallel. The membrane separation unit(s) M-1 is provided with a hydrogen selective membrane that is capable of a bulk separation of a hydrogen enriched permeate stream 3 from a CO₂ enriched retentate stream 2. Where the shifted synthesis gas is derived from a high pressure gasifier, the synthesis gas may be obtained at above the desired operating pressure for the membrane separation unit(s) of at least 50 barg, preferably, at least 60 barg. Where the shifted synthesis gas is derived from a reformer, it may be necessary to boost the pressure to at least 50 barg, preferably, at least 60 barg, using a compressor. The temperature of the shifted synthesis gas stream 1 should correspond to the operating temperature of the hydrogen selective membrane. Typically, the temperature of the shifted synthesis gas stream is in the range of 20 to 250°C. If necessary, the shifted synthesis gas stream is heated, for example, against a hot process stream or steam, to the operating temperature of the hydrogen selective membrane. However, it is preferred that the hydrogen selective membrane is a low temperature hydrogen selective membrane that operates at a temperature of 20 to 50°C, typically 40°C.

The shifted synthesis gas stream 1 comprises hydrogen (for example, 50 to 60 mol%, typically 55 mol%), carbon dioxide (for example, 40 to 50 mol%, typically 45 mol%), and contaminants such as water, inerts (for example nitrogen and/or argon), methane and carbon monoxide. Where the shifted synthesis gas stream is from a high pressure coal or petroleum coke gasifier, it may be a sour shifted synthesis gas stream comprising hydrogen sulfide (0.2 to 1.5 mol%, typically 1 mol%). However, it is also envisaged that hydrogen sulfide may have been removed from the sour shifted synthesis gas stream 1 upstream of the membrane separation unit(s) M-1. Where the shifted synthesis gas stream is derived from a reformer, hydrogen sulfide will have been removed from the feed to the reformer so as to avoid poisoning the reforming catalyst. Accordingly, as discussed above, the shifted synthesis gas stream will not contain any hydrogen sulfide impurity.

The membrane that is employed in the membrane separation unit(s) M-1 suitably has a H₂ selectivity (over CO₂) of 16, in order to prevent significant quantities of CO₂ from entering the hydrogen enriched stream 3 as this will reduce the carbon capture level. Preferably the hydrogen selectivity of the membrane is greater than 20, in particular greater than 40.

Optionally, a sweep gas may be introduced to the membrane separation units at the permeate side of the membrane in order to reduce the partial pressure of hydrogen in the permeate stream. This is advantageous as it improves the hydrogen selectivity of the membrane and increases the hydrogen flux through the membrane. The sweep gas may be nitrogen, for example, a nitrogen stream that is produced as a by-product in an Air Supply Unit (ASU) that supplies oxygen to a gasifier or reformer. Alternatively, the sweep gas may be steam.

The hydrogen enriched permeate stream is used as a fuel stream for one or more gas turbines. Typically, the pressure of the hydrogen enriched permeate stream 3 is above the pressure at which the gas turbine(s) are operated in order to avoid the need for hydrogen compression, which is energy intensive. Typically, gas turbines are operated at a pressure in the range of 25 to 60 barg, preferably, 30 to 50 barg, in particular, 35 to 45 barg.

Where hydrogen sulfide is present in the synthesis gas stream 1, a portion of this H₂S will pass through the hydrogen selective membrane together with the hydrogen. Accordingly, the hydrogen enriched permeate stream 3 is passed through a bed of absorbent, such as a zinc oxide bed (C-2) to ensure that any H₂S is removed from the hydrogen enriched permeate stream upstream of the gas turbine (not shown).

Suitably, the retentate stream 2 from the membrane separation unit(s) M-1 has a CO₂ concentration of 70 to 80 mole% (depending of the Selectivity of the membrane). Where stream 1 is a sour synthesis gas stream, the CO₂ enriched retentate stream 2 from the membrane is sent to an Absorption Tower (C-1), where the stream 2 is contacted with a solvent that acts as a selective absorbent for H₂S thereby generating a desulfurised shifted synthesis gas stream 4. Suitable solvents that act as selective absorbent for H₂S include Rectisol™ (methanol) or Selexol™ (a mixture of dimethyl ethers of polyethylene glycol).

The desulfurised shifted stream 4 is sent to a drier (D-1) in order to remove water prior to condensing out the CO₂ in a condensation plant. There are many methods known in the art for the removal of saturated water from a process stream including absorbent beds (for example, molecular sieve beds) and / or an absorption tower that employs triethylene glycol (TEG) as water absorbent. The resulting dehydrated shifted synthesis gas stream 5 (having a water content of less than 1 ppm on a molar basis) enters the CO₂ condensation plant at a an elevated pressure of at least 45 bar, preferably at least 55 barg, and at ambient temperature, typically 25°C, where it is cooled in EX-1 to a temperature of approximately 2°C against cold water or another "cold stream", which maybe a slipstream of liquid CO₂ or a cool gaseous H₂ stream arising downstream of EX-1.

The cooled shifted synthesis gas stream 6 then enters the first of a series of cryogenic separation stages each of which comprises a heat exchanger and flash vessel. The flash vessels (V-1 to V-7) are operated at substantially the same pressure but at successively lower temperatures. In heat exchanger EX-2, the cooled synthesis stream 6 is further cooled to a temperature of -4°C against an internal refrigerant (cold liquid CO₂ stream 35) to generate a two phase stream 7 which is then passed to flash vessel V-1 where a portion of the CO₂ in stream 7 separates as a liquid phase from a vapour phase. A vapour stream 8 that is enriched in hydrogen and depleted in CO₂ is removed overhead from flash vessel V-1 and is passed through heat exchanger EX-3 where it is further cooled against an internal refrigerant (cold liquid CO₂ stream 45) to a temperature of -10°C thereby generating a further two phase stream 10 which is passed to flash vessel V-2 where a portion of the CO₂ in stream 10 separates as a liquid phase from a vapour phase. A vapour stream 11 that is further enriched in hydrogen is withdrawn overhead from flash vessel V-2 and is passed through heat exchanger EX-4 where this stream is further cooled to a temperature of -16°C against an internal refrigerant (cold liquid CO₂ stream 49) thereby generating a two phase stream 13 that is passed to flash vessel V-3 where a portion of the CO₂ in stream 13 separates as a liquid phase from a vapour phase. A vapour stream 14 that is further enriched in hydrogen is withdrawn overhead from flash vessel V-3 and is passed through heat exchanger EX-5 where this stream is further cooled to a temperature of -22°C against an internal refrigerant (cold liquid CO₂ stream 56) thereby generating a further two phase stream that is passed to flash vessel V-4 where a portion of the CO₂ in this stream separates as a liquid phase from a vapour phase. A vapour stream 17 that is further enriched in hydrogen is withdrawn overhead from flash vessel V-4 and is passed through heat exchanger EX-6 where this stream is further cooled to a temperature of -28°C against an internal refrigerant (cold liquid CO₂ stream 63) thereby generating a further two phase stream 19 that is passed to flash vessel V-5 where a portion of the CO₂ in stream 19 separates as a liquid phase from a vapour phase. A vapour stream 20 that is further enriched in hydrogen is withdrawn overhead from flash vessel V-5 and is passed through heat exchanger EX-7 where this stream is further cooled to a temperature of -34°C against an internal refrigerant (cold liquid CO₂ stream 69) thereby generating a further two phase stream 22 that is passed to flash vessel V-6 where a portion of the CO₂ in this stream separates as a liquid phase from a vapour phase. A vapour stream 23 that is further enriched in H₂ is withdrawn overhead from flash vessel V-6 and is passed through heat exchanger EX-8 where this stream is further cooled to a temperature of -50°C against an internal refrigerant (cold liquid CO₂ stream 73) thereby generating a final two phase stream 25 that is passed to flash vessel V-7 where a final portion of the CO₂ separates as a liquid phase from a vapour phase. A non-condensable stream 26 comprising at least 98% H₂ is withdrawn overhead from flash vessel V-7. This non-condensable stream 26 is heated in a heater EX-9 (against the feed gas stream 5 to the CO₂ condensation plant or another hot process stream such as steam) to generate stream 28 before being expanded to lower pressure in expander EXP-1 thereby generating hydrogen stream 29. Suitably, the expander EXP-1 is connected to a motor to recover energy. The H₂ stream 29 is mixed with the membrane permeate stream 30 thereby generating hydrogen fuel stream 31 that is sent to at least one gas turbine (not shown) for combustion. The pressure of the hydrogen fuel stream 31 is above the operating pressure of the gas turbine thereby allowing the omission of a hydrogen compressor.

The internal refrigerant streams 35, 45, 49, 56, 63, 69 and 73 that are fed to the shell sides of heat exchangers EX-2, EX-3, EX-4, EX-5, EX-6, EX-7 and EX-8 respectively are at successively lower temperatures and pressures as detailed below in Table 1:

**Table 1: Temperatures and Pressure of Internal Refrigerant Streams**

| **Internal Refrigerant Stream** | **Temperature (°C)** | **Pressure (barg)** |
|---|---|---|
| 35 | -10 | 25.5 |
| 45 | -16 | 21.4 |
| 49 | -22 | 17.5 |
| 56 | -28 | 14.2 |
| 63 | -34 | 11.4 |
| 69 | -40 | 9.0 |
| 73 | -55 | 4.5 |

The internal refrigerant streams are derived from the liquid CO₂ streams 9, 12, 15, 18, 21, 24 and 27 that are removed from the flash drums V-1, V-2, V-3, V-4, V-5, V-6, and V-7 respectively (at substantially the same pressure but a successively lower temperatures). Thus, a portion of stream 9 is flashed across Joule Thomson valve VAL-1 to generate a cooled two phase stream that is passed to flash vessel V-9. A liquid CO₂ stream 35 is removed from at or near the bottom of flash vessel V-9 and is fed, as internal refrigerant, to the shell side of heat exchanger EX-2. A CO₂ vapour stream 36 exits heat exchanger EX-2 and is combined with a CO₂ vapour stream 34 that is withdrawn from at or near the top of flash vessel V-9 and the combined vapour stream is cooled in EX-10 against cold CO₂ gas (or other cold process stream) thereby forming cooled stream 37 that is passed to compressor COMP-1 of a compression train. A portion of liquid stream 9 from flash vessel V-1 is combined with liquid CO₂ streams 12 and 15 that are withdrawn from flash vessels V-2 and V-3 respectively thereby forming combined stream 39. This combined stream 39 is then divided to form streams 40 and 41. Stream 40 is further divided to form streams 42 and 43 that are flashed across Joule Thomson valves VAL-2 and VAL-3 respectively thereby forming cooled two-phase streams that are fed to flash vessels V-10 and V-11 respectively. Liquid CO₂ streams 45 and 49 are withdrawn from at or near the bottom of flash vessels V-10 and V-11 respectively and are passed as internal refrigerant to the shell side of heat exchangers EX-3 and Ex-4 respectively. A vapour stream 46 that exits heat exchanger EX-3 is combined with vapour stream 44 that is withdrawn from at or near the top of flash vessel V-10 and is cooled in exchanger EX-11 against cold CO₂ gas (or other cold process stream) before being sent to compressor COMP-2 of the compression chain. Vapour stream 50 that exits heat exchanger EX-4 is combined with vapour stream 48 that is withdrawn from at or near the top of flash vessel V-11 and is sent to compressor COMP-3 of the compression chain. The compressed stream from compressor COMP-3 is combined with the compressed stream from compressor COM-2.

Liquid CO₂ stream 41 is combined with liquid CO₂ stream 18 that is withdrawn from flash vessel V-4 thereby forming combined stream 52. This combined stream is then divided to form streams 54 and 53. Stream 54 is flashed across Joule Thomson valve VAL-4 thereby forming a cooled two-phase stream that is fed to flash vessel V-12. A liquid CO₂ stream 56 is withdrawn from at or near the bottom of flash vessel V-12 and is passed as internal refrigerant to the shell side of heat exchanger EX-5. Vapour stream 57 that exits heat exchanger EX-3 is combined with vapour stream 55 that is withdrawn from at or near the top of flash vessel V-12 and the combined stream is sent to compressor COMP-4 of the compression chain. Liquid CO₂ stream 53 is combined with liquid CO₂ stream 21 that is withdrawn from flash vessel V-5 thereby forming combined stream 59. This combined stream is divided to form streams 60 and 61. Stream 60 is flashed across Joule Thomson valve VAL-5 thereby forming a cooled two-phase stream that is fed to flash vessel V-13. A liquid CO₂ stream 63 is withdrawn from at or near the bottom of flash vessel V-13 and is passed as internal refrigerant to the shell side of heat exchanger EX-6. Vapour stream 64 that exits heat exchanger EX-6 is combined with vapour stream 62 that is withdrawn from at or near the top of flash vessel V-13 and the combined stream is sent to compressor COMP-5 of the compression chain.

Liquid CO₂ stream 61 is combined with a portion of liquid CO₂ stream 24 that is withdrawn from flash vessel V-6 thereby forming combined stream 66. This combined stream is flashed across Joule Thomson valve VAL-6 thereby forming a cooled two-phase stream that is fed to flash vessel V-14. A liquid CO₂ stream 69 is withdrawn from at or near the bottom of flash vessel V-14 and is passed as internal refrigerant to the shell side of heat exchanger EX-7. Vapour stream 70 that exits heat exchanger EX-7 is combined with vapour stream 68 that is withdrawn from at or near the top of flash vessel V-14 and the combined stream is sent to compressor COMP-6 of the compression chain. A portion of liquid CO₂ stream 24 that is withdrawn from flash vessel V-6 is combined with liquid CO₂ stream 27 from flash vessel V-7 and the combined stream is flashed across valve Joule Thomson VAL-7 thereby forming a cooled two-phase stream that is fed to flash vessel V-15. A liquid CO₂ stream 73 is withdrawn from at or near the bottom of flash vessel V-15 and is passed as internal refrigerant to the shell side of heat exchanger EX-8. Vapour stream 74 that exits heat exchanger EX-8 is combined with vapour stream 72 that is withdrawn from at or near the top of flash vessel V-15 and the combined stream is sent to compressor COMP-7 of the compression chain. The compressed streams 58, 65, 71 and 75 from compressors COMP-4, COMP-5, COMP-6 and COMP-7 respectively are combined to form stream 76. Stream 76 is then combined with stream 47 and is fed to COMP-2 of the compression chain. The compressed CO₂ vapour streams from compressors COMP-1, COM-2 and COMP-3 are combined and cooled against a cold process stream in EX-12 before passing the combined vapour stream through export gas compressors COMP-8 and COMP-9 that compress the CO₂ to pipeline pressure thereby forming an exported CO₂ stream. Heat of compression is removed by passing the gas through heat exchangers EX-13 and EX-14 where the gas is cooled against a cold process stream (e.g. cold water, cool CO₂ gas or cool H₂ gas). The pressure of the exported CO₂ stream is such that the CO₂ is in a supercritical state. By supercritical state is meant that the temperature and pressure of the exported CO₂ stream are above the critical temperature and pressure for CO₂ (31.1 °C and 73.8 bara).

Although the process of the invention has been described with respect to 7 cryogenic separation stages, the number of cryogenic separation stages may be increased or decreased depending predominantly on the desired level of carbon capture, energy efficiency targets and the capital cost requirements. At least 1 cryogenic separation stage is required, preferably, at least 2. However, a single cryogenic separation stage that employs liquid CO₂ as internal refrigerant would be inefficient in terms of refrigeration power requirements. Accordingly, the number of cryogenic separation stages is preferably at least 2, more preferably 3 to 10, in particular, 5 to 8 in order to optimise the refrigeration power requirements (for the refrigerant compression). However, there is a limit on the lowest temperature in the last stage of separation, as the temperature must be maintained above a value where solid CO₂ will form. This typically occurs at a temperature of -56°C (the triple point for pure CO₂ is at 5.18 bar and at a temperature of 56.4°C) although the presence of H₂ may depress this freezing point.

The person skilled in the art will understand that the temperature of the liquid CO₂ streams that are employed as internal refrigerants for the heat exchangers of the cryogenic separation stages may be varied depending on the number of cryogenic stages and the desired level of carbon capture. The temperature of the internal refrigerants can be varied by adjusting the pressure drop across the Joule Thomson valves thereby altering the amount of cooling via the Joule Thomson effect. In addition, the temperature of the refrigerant streams may be varied by adjusting the temperature of the liquid CO₂ streams that are flashed across the Joule Thomson valves. Accordingly, two or more of liquid CO₂ streams 9, 12, 15, 18, 21, 24 and 27 may be mixed to form a combined liquid CO₂ stream of intermediate temperature. It is also envisaged that a combined liquid CO₂ stream may be further mixed with one or more of streams 9, 12, 15, 21, 24 and 27 or with another combined liquid CO₂ stream to form a further combined liquid CO₂ stream. It is preferred that the temperature difference between the streams that are combined to form the combined stream is kept to a minimum, for example, a temperature difference of less than 20°C, preferably less than 15°C, for example, less than 12°C. For example, stream 9 may be combined with streams 12 and 15 to form combined stream 39 (a temperature difference of 12°C) but may not be combined with stream 27 (a temperature difference of 46°C).

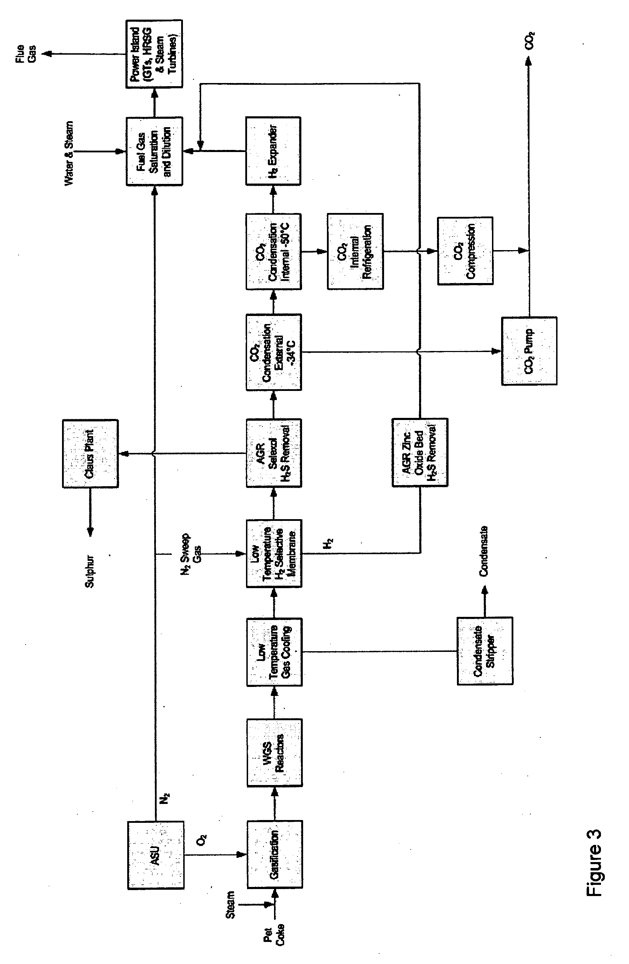

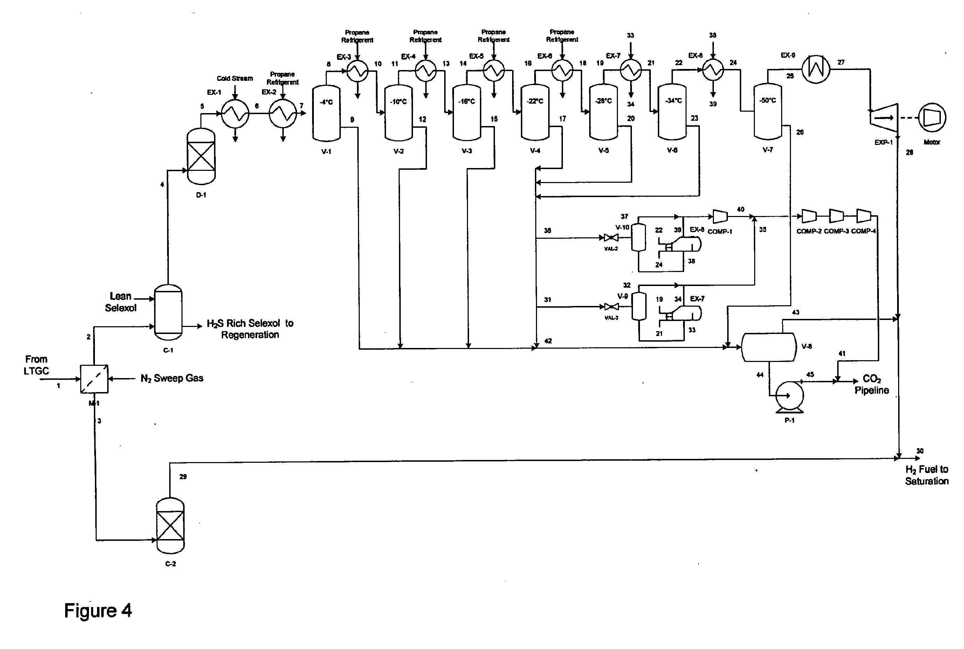

Figure 3 illustrates a block flow diagram for a modified scheme that will be described by reference to Figure 1. Figure 3 is identical to Figure 1 upstream of the CO₂ condensation plant. In the modified scheme of Figure 3, the CO₂ retentate stream (that has been desulfurised and dried) is passed to a CO₂ condensation plant having at least one cryogenic separation stage that employs propane as an external refrigerant thereby separating a liquid CO₂ product stream from a H₂ enriched vapour stream. The liquid CO₂ product stream is passed to a CO₂ pump where it is pressurised to form a dense phase stream that is at pipeline export pressure. The H₂ enriched vapour stream is used as feed to at least one cryogenic separation stage that employs a liquid CO₂ stream as internal refrigerant thereby forming a CO₂ enriched vapour stream that is passed to CO₂ compression and a hydrogen stream that is sent to the H₂ Expander. The compressed CO₂ stream is in a supercritical state and may be commingled with the dense phase CO₂ stream from the CO₂ pump. The remainder of the scheme is identical to Figure 1. Figure 4 illustrates a detailed process flow diagram for the hydrogen separation membrane separation unit and the CO₂ condensation plant of the block diagram outlined in Figure 3. The flow diagram is identical to that of Figure 2 upstream of heat exchanger EX-2 of the CO₂ condensation plant.

The cooled shifted synthesis gas stream 6 then enters the first of a series of cryogenic separation stages each of which comprises a heat exchanger and flash vessel. The flash vessels (V-1 to V-7) are operated at substantially the same pressure but at successively lower temperatures. In heat exchanger EX-2, the cooled synthesis stream 6 is further cooled to a temperature of -4°C against an external refrigerant (propane) to generate a two phase stream 7 which is then passed to flash vessel V-1 where a portion of the CO₂ in stream 7 separates as a liquid phase from a vapour phase. A vapour stream 8 that is enriched in hydrogen is removed overhead from flash vessel V-1 and is passed through heat exchanger EX-3 where it is further cooled against an external refrigerant (propane) to a temperature of -10°C thereby generating a further two phase stream 10 which is passed to flash vessel V-2 where a portion of the CO₂ in stream 10 separates as a liquid phase from a vapour phase. A vapour stream 11 that is further enriched in hydrogen is withdrawn overhead from flash vessel V-2 and is passed through heat exchanger EX-4 where this stream is further cooled to a temperature of -16°C against an external refrigerant (propane) thereby generating a two phase stream 13 that is passed to flash vessel V-3 where a portion of the CO₂ in stream 13 separates as a liquid phase from a vapour phase. A vapour stream 14 that is further enriched in hydrogen is withdrawn overhead from flash vessel V-3 and is passed through heat exchanger EX-5 where this stream is further cooled to a temperature of -22°C against an external refrigerant (propane) thereby generating a further two phase stream that is passed to flash vessel V-4 where a portion of the CO₂ in this stream separates as a liquid phase from a vapour phase. A vapour stream 16 that is further enriched in hydrogen is withdrawn overhead from flash vessel V-4 and is passed through heat exchanger EX-6 where this stream is further cooled to a temperature of -28°C against an external refrigerant (propane) thereby generating a further two phase stream 18 that is passed to flash vessel V-5 where a portion of the CO₂ in stream 18 separates as a liquid phase from a vapour phase. A vapour stream 19 that is further enriched in hydrogen is withdrawn overhead from flash vessel V-5 and is passed through heat exchanger EX-7 where this stream is further cooled to a temperature of -34°C against an internal refrigerant (liquid CO₂ stream 33) thereby generating a further two phase stream 21 that is passed to flash vessel V-6 where a portion of the CO₂ in this stream separates as a liquid phase from a vapour phase. A vapour stream 22 that is further enriched in H₂ is withdrawn overhead from flash vessel V-6 and is passed through heat exchanger EX-8 where this stream is further cooled to a temperature of -50°C against an internal refrigerant (liquid CO₂ stream 38) thereby generating a final two phase stream 24 that is passed to flash vessel V-7 where a final portion of CO₂ separates as a liquid phase from a vapour phase. A non-condensable stream 25 comprising at least 98% H₂ is withdrawn overhead from flash vessel V-7. This non-condensable stream 25 is heated in a heater EX-9 to generate stream 27 before being expanded to lower pressure in expander EXP-1 thereby generating hydrogen stream 28. Suitably, the expander EXP-1 is connected to a motor to recover energy. The H₂ stream 28 is mixed with the desulfurized membrane permeate stream 29 thereby generating hydrogen fuel stream 30 that is sent to at least one gas turbine (not shown) for combustion. The pressure of the hydrogen fuel stream 30 is above the operating pressure of the gas turbine thereby allowing the omission of a hydrogen compressor.

The external refrigerant that is fed to the shell side of heat exchangers EX-2, EX-3, EX-4, EX-5 and EX-6 and the internal refrigerant (liquid CO₂) that is fed to the shell side of heat exchangers EX-7 and EX-8 is at successively lower temperatures. The external refrigerant may be obtained using any cryogenic method known to the person skilled in the art, including cryogenic methods for producing refrigerants for liquefying natural gas. Generally, the external refrigerant that is fed to heat exchangers EX-2 to EX-6 is propane. However, other refrigerants may be used such as ammonia, hydrochlorofluorocarbons and mixed refrigerants. Typical mixed refrigerants comprise at least two refrigerants selected from the group consisting of butanes, propanes, ethane and ethylene. The composition of the mixed refrigerant streams that are fed to heat exchangers EX-2 to EX-6 may be adjusted to achieve the desired level of cooling.

The temperatures of the final two cryogenic cooling stages mean that propane cannot be employed as external refrigerant. An advantage of this process scheme is that the final two cryogenic cooling stages employ liquid CO₂ as an internal refrigerant and not a further external refrigerant such as ethane, ethylene or a mixed refrigerant.

The liquid CO₂ streams from flash vessels V-4, V-5 and V-6 are combined to form a combined stream. This stream is then divided to form three sub-streams (31, 36 and 42). Sub-stream 42 is combined with liquid CO₂ streams 9, 12, 15, and 26 from flash vessels V-1, V-2, V-3 and V-7 respectively and the resulting liquid CO₂ stream is passed to hold-up vessel V-8. A liquid CO₂ stream 44 is withdrawn from the bottom of hold up tank V-8 and is sent to a CO₂ pump (P-1). The CO₂ pump P-1 increases the pressure of the CO₂ such that the CO₂ is in a dense phase (the transition to a dense phase occurs at approximately 80 barg) and then to the pipeline export pressure, of approximately 130 to 200 barg. It may be necessary to heat the dense phase CO₂ prior to it entering the CO₂ export pipeline, in order to meet pipeline design requirements, for example, a side stream from the dense phase CO₂ stream 45 may be used to cool the synthesis gas stream 5 in cross exchanger (EX-1) before being recombined with the dense phase CO₂. The hydrogen enriched vapour stream from hold-up tank V-8 is combined with streams 28 and 29 to form the hydrogen fuel stream 30 that is sent to at least one gas turbine of the Power Island (not shown).

The internal refrigerant streams 33 and 38 are formed as follows. Sub-stream 31 is flashed across Joule Thomson valve VAL-2 thereby forming a cooled two-phase stream that is fed to flash vessel V-9. A liquid CO₂ stream 33 is withdrawn from at or near the bottom of flash vessel V-9 and is passed as internal refrigerant to the shell side of heat exchanger EX-7. Vapour stream 34 that exits heat exchanger EX-7 is combined with vapour stream 32 that is withdrawn from at or near the top of flash vessel V-9 to form combined stream 35. Sub-stream 36 is flashed across Joule Thomson valve VAL-2 thereby forming a cooled two-phase stream that is fed to flash vessel V-10. A liquid CO₂ stream 38 is withdrawn from at or near the bottom of flash vessel V-10 and is passed as internal refrigerant to the shell side of heat exchanger EX-8. Vapour stream 39 that exits heat exchanger EX-8 is combined with vapour stream 37 that is withdrawn from at or near the top of flash vessel V-10 and the combined stream is sent to compressor COMP-1 thereby forming compressed stream 40. Compressed CO₂ stream 40 is combined with stream 35 before being sent to compressors COMP-2, COM-3 and COMP-4 of the compression chain. Compressed stream 41 that is removed from the final compressor COM-4 of the compression chain is in a supercritical state and may be combined with dense phase CO₂ stream 45 from CO₂ pump P-1 before being passed into a pipeline. By supercritical state is meant that the gas is above the critical temperature and pressure for CO₂ (31.1°C and 73.8 bara).

Although the process of the invention has been described with respect to 7 cryogenic separation stages, the number of cryogenic separation stages may be increased or decreased depending predominantly on the desired level of carbon capture, energy efficiency targets and the capital cost requirements. At least 1 cryogenic separation stage that employs an external refrigerant and at least 1 cryogenic separation stages that employs an internal refrigerant is required. In order to optimise the refrigeration power requirements (for the refrigerant compression), it is preferred that there are at least 2, more preferably 3 to 6, in particular, 4 or 5 cryogenic separation stages that employ an external refrigerant. Preferably, there are at least two, more preferably, 2 to 4 cryogenic separation stages that employ liquid CO₂ as an internal refrigerant.

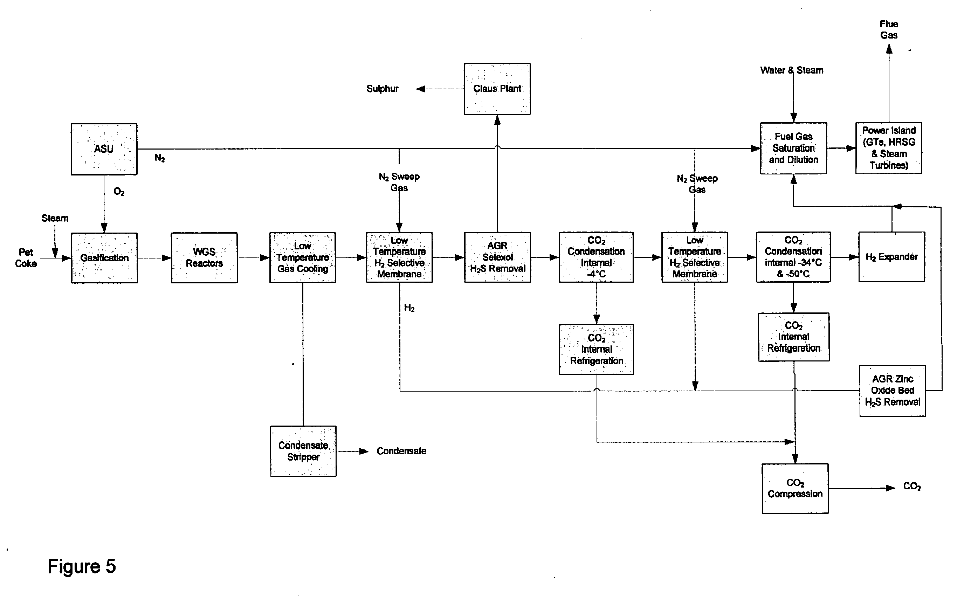

Figure 5 is identical to Figure 1 upstream of the CO₂ condensation plant and will be described with reference to Figures 2 and 4. In the modified scheme of Figure 5, the enriched CO₂ stream is subjected to a first cryogenic separation stage that employs liquid CO₂ as internal refrigerant and cools the enriched CO₂ stream down to a temperature of - 4°C thereby generating a two phase stream that is separated into a liquid CO₂ stream and a H₂ enriched vapour stream in a first flash vessel. The H2 enriched vapour stream from this first cryogenic separation stage is passed to a second low temperature hydrogen selective membrane separation unit to separate a H2 enriched permeate stream from a CO₂ enriched retentate stream. Nitrogen may be added as sweep gas to the permeate stream. Depending upon the operating temperature of the low temperature hydrogen selective membrane, it may be necessary to warm the H2 enriched vapour stream prior to this stream entering the second membrane separation unit. The CO₂ enriched retentate stream is then subjected to two cryogenic separation stages at temperatures of -34°C and -50°C where liquid CO₂ is employed as external refrigerant. The first cryogenic separation stage is identical to that of Figure 2 while the final two cryogenic separation stages are identical to the final two cryogenic separation stages of Figure 4 that employ liquid CO₂ as internal refrigerant. The second membrane separation unit that is within the CO₂ condensation plant reduces the number of cryogenic separation stages (from 7 to 3). The hydrogen enriched permeate stream from the second membrane separation unit of the CO₂ condensation plant is mixed with the hydrogen enriched permeate stream from the first membrane separation unit prior to entering the zinc oxide beds. The resulting desulfurised stream is then blended with the incondensable stream (hydrogen enriched stream from the final cryogenic separation stage of the CO₂ condensation plant). The liquid CO₂ stream that is withdrawn from the flash vessel of the first cryogenic separation stage and a portion of the liquid CO₂ streams that are withdrawn from the flash vessels of the final two cryogenic separation stages are combined and the combined liquid CO₂ stream is pumped to the required transportation pressure as described for Figure 2. The vapour streams that are formed in the external refrigeration circuits of the final two cryogenic separation stages are compressed into the dense phase and combined with the liquid CO₂ stream that has been pumped to the required transportation pressure as described for Figure 4.

## Claims

1. A process for separating hydrogen and carbon dioxide from a synthesis gas stream comprising carbon dioxide and hydrogen, said process comprising:
(A) feeding a shifted synthesis gas stream at a pressure of at least 50 bar gauge to at least one membrane separator unit that is provided with a membrane having a selectivity for H₂ over CO₂ of greater than 16 and withdrawing a hydrogen enriched permeate stream having a CO₂ content of less than 10 mole % and a carbon dioxide enriched retentate stream comprising at least 63 mole % CO₂, preferably, at least 70 mole % CO₂ from the membrane separator unit;
(B) feeding the carbon dioxide enriched retentate stream to a carbon dioxide condensation plant where the retentate stream is cooled to condense out liquid CO₂ by:
(i) passing the carbon dioxide enriched retentate stream through a heat exchanger where the retentate stream is cooled to a temperature below the dew point of the retentate stream but above the triple point of CO₂ by heat exchange with an internal refrigerant stream thereby forming a two-phase stream comprising a liquid CO₂ phase and a vapour phase that is enriched in hydrogen compared with the retentate stream wherein the internal refrigerant stream is a cooled liquid CO₂ stream that is subsequently produced in the process and the cooled liquid CO₂ stream is vaporized in the heat exchanger thereby forming a CO₂ vapour stream;
(ii) passing the two-phase stream from step (i) to a separator vessel wherein the liquid phase is separated from the vapour phase and withdrawing a liquid CO₂ stream and a hydrogen enriched vapour stream from the separator vessel;
(iii) if the CO₂ content of the hydrogen enriched vapour stream is greater than 10 mole %, passing the vapour stream through a further heat exchanger where the vapour stream is cooled to a temperature below the dew point of the vapour stream but above the triple point of CO₂ by heat exchange with a further internal refrigerant stream thereby forming a further two-phase stream comprising a liquid CO₂ phase and a vapour phase that is further enriched in hydrogen compared with the carbon dioxide enriched retentate stream wherein the internal refrigerant stream is a cooled liquid CO₂ stream that is subsequently produced in the process and the cooled liquid CO₂ stream is vaporized in the further heat exchanger thereby forming a further CO₂ vapour stream;
(iv) passing the two-phase stream from step (iii) to a further separator vessel wherein the liquid phase is separated from the vapour phase and withdrawing a liquid CO₂ stream and a hydrogen enriched vapour stream from the further separator vessel; and
(v) if necessary, repeating steps (iii) to (iv) until the CO₂ content of the hydrogen enriched vapour stream that is withdrawn from the further separator vessel is less than 10 mole %;
(C) passing the hydrogen enriched vapour stream having a CO₂ content of less than 10 mole % that is formed in step (B) and/or the hydrogen enriched permeate stream having a CO₂ content of less than 10 mole % that is formed in step (A) as a fuel feed stream to the combustor of at least one gas turbine of a power plant at a pressure above the operating pressure of the gas turbine(s) for the production of electricity;
(D) compressing the CO₂ vapour stream(s) that are formed by vaporisation of the internal refrigerant stream(s) in step (B) thereby forming a compressed CO₂ stream wherein the pressure of the compressed CO₂ stream is above the critical pressure for CO₂ and wherein the CO₂ is either in a supercritical state or a liquid state when the temperature of the compressed CO₂ stream is above or below the critical temperature for CO₂ respectively; and
(E) sequestering the compressed CO₂ stream.

2. A process as claimed in Claim 1 wherein the shifted synthesis gas stream is fed to the membrane separation unit(s) at a temperature in the range of 0 to 50°C, preferably, 20 to 40°C and the membrane separation unit is provided with a hydrogen selective membrane that is capable of operating at the temperature of the shifted synthesis gas feed stream.

3. A process as claimed in Claim 1 wherein the shifted synthesis gas stream is fed to the membrane separator unit(s) at a temperature in the range of 75 to 400°C, preferably, 100 to 300°C and wherein the CO₂ enriched retentate stream that is removed from the membrane separation unit(s) is cooled downstream of the membrane separation unit(s) before the retentate stream enters the CO₂ condensation plant.

4. A process as claimed in Claim 3 wherein the shifted synthesis gas stream that is fed to the membrane separator unit(s) comprises steam and wherein a condensate comprising water is separated from the cooled CO₂ enriched retentate stream before the retentate stream enters the CO₂ condensation plant.

5. A process as claimed in Claim 3 wherein, prior to being fed to the membrane separation unit(s), the shifted synthesis gas stream is cooled to below its dew point thereby forming a condensate that is separated from the shifted synthesis gas stream and the shifted synthesis gas stream is subsequently reheated to a temperature in the range of 75 to 400°C, preferably, 100 to 300°C.

6. A process as claimed in any one of the preceding claims wherein the shifted synthesis gas stream is fed to the membrane separator unit(s) at a pressure of at least 60 barg.

7. A process as claimed in any one of the preceding claims wherein the H₂ enriched retentate stream is withdrawn from the membrane separation unit(s) at a pressure that is above the operating pressure of the gas turbine(s) of the power plant.

8. A process as claimed in any one of the preceding claims wherein the hydrogen selective membrane that is employed in the membrane separator unit(s) has a H₂ selectivity (over CO₂) of greater than 20, preferably, greater than 40.

9. A process as claimed in any one of the preceding claims wherein the CO₂ content of the hydrogen enriched permeate stream is less than 2 mole%.

10. A process as claimed in any one of the preceding claims wherein the CO₂ content of the CO₂ enriched retentate stream is in the range of 70 to 85 mole%.

11. A process as claimed in any one of the preceding claims wherein the CO₂ enriched retentate stream is passed to a pre-cooling heat exchanger of the CO₂ condensation plant where the retentate stream is pre-cooled to a temperature in the range of 0 to 10°C.

12. A process as claimed in any one of the preceding claims wherein the CO₂ condensation plant comprises a plurality of cryogenic separation stages that are arranged in series wherein each cryogenic separation stage comprises a heat exchanger and a gas-liquid separation vessel and the CO₂ enriched retentate stream is fed to the first cryogenic separation stage in the series.

13. A process as claimed in Claim 12 wherein the CO₂ condensation plant comprises 4 to 8 cryogenic separation stages arranged in series.

14. A process as claimed in Claims 12 or 13 wherein an internal refrigerant stream is employed as refrigerant in the heat exchanger of each cryogenic separation stage.

15. A process as claimed in Claims 12 or 13 wherein the CO₂ condensation plant comprises at least one cryogenic separation stage having a heat exchanger that employs an external refrigerant upstream of at least one cryogenic separation stage having a heat exchanger that employs an internal refrigerant.

16. A process as claimed in any one of the preceding claims wherein the internal refrigerant stream(s) is generated by:
(i) expanding a liquid CO₂ stream that is produced in the process of the present invention to lower pressure through a Joule-Thomson valve thereby forming a cooled two phase stream;
(ii) passing the cooled two phase stream to a separator vessel where a vapour phase comprising gaseous CO₂ separates from a liquid phase comprising liquid CO₂; and
(iii) withdrawing a cooled liquid CO₂ stream from the gas-liquid separator and employing this liquid CO₂ stream as internal refrigerant in step (A);

17. A process as claimed in any one of Claims 12 to 16 wherein the H₂ enriched vapour stream that is withdrawn from the separator vessel of an intermediate cryogenic separation stage has a H₂ content of at least 40 mole%, preferably, at least 50 mole% and this H₂ enriched vapour stream is passed to a membrane separation unit of the CO₂ condensation plant where a hydrogen selective membrane is used to separate a hydrogen enriched permeate stream from a CO₂ enriched retentate stream; and the CO₂ enriched retentate stream from the membrane separation unit of the CO₂ condensation plant is used as feed to a further cryogenic separation stage of the CO₂ condensation plant.

18. A process as claimed in any one of claims 12 to 17 wherein the hydrogen enriched vapour stream (non-condensable stream) from the final cryogenic separation stage of the CO₂ condensation plant comprises at least 90 mole% hydrogen, preferably, at least 95% hydrogen, more preferably, at least 98 mole % hydrogen, in particular, at least 99 mole % hydrogen.
